## Europäisches Patentamt
## European Patent Office
## Office européen des brevets

(11) Numéro de publication: **0 060 780**
**B1**

(12) **FASCICULE DE BREVET EUROPEEN**

(45) Date de publication du fascicule du brevet: **19.06.85**

(21) Numéro de dépôt: **82400439.4**

(22) Date de dépôt: **11.03.82**

(51) Int. Cl.⁴: **C 03 C 17/00, C 03 C 17/25**

(54) Fabrication de verre plat revêtu d'un film d'oxydes métalliques par pulvérisation contrôlée.

(30) Priorité: **13.03.81 JP 36004/81**

(43) Date de publication de la demande:
**22.09.82 Bulletin 82/38**

(45) Mention de la délivrance du brevet:
**19.06.85 Bulletin 85/25**

(84) Etats contractants désignés:
**BE DE FR IT LU NL SE**

(56) Documents cités:
**FR-A-2 202 857**
**FR-A-2 288 068**
**GB-A-2 068 935**
**GB-A-2 068 937**

(73) Titulaire: **SAINT-GOBAIN VITRAGE**
**Les Miroirs 18, avenue d'Alsace**
**F-92400 Courbevoie (FR)**

(72) Inventeur: **Fujimoto, Katsuji**
**1-Chome, 8-56, Aobadai**
**Ichihara-shi Chiba (JP)**
Inventeur: **Hisamoto, Chiharu**
**1-Chome, 7-C-144, Aobadai**
**Ichihara-shi Chiba (JP)**
Inventeur: **Higashimura, Toshiyuki**
**1-Chome, 7-C-124, Aobadai**
**Ichihara-shi Chiba (JP)**

(74) Mandataire: **Leconte, Jean-Gérard et al**
**Saint-Gobain Recherche 39, Quai Lucien Lefranc**
**F-93304 Aubervilliers Cedex (FR)**

Courier Press, Leamington Spa, England.

## Description

La présente invention concerne la fabrication en continu de verre plat dont la surface est revêtue d'un film d'oxydes métalliques refléchissant la chaleur ou le rayonnement visible.

Plus précisément, elle porte sur la technique de fabrication de verre plat revêtu d'un film d'oxydes métalliques dans laquelle le film est obtenu par pulvérisation sur le verre porté à haute température d'une solution de composés métalliques décomposables en oxydes à la chaleur, à l'aide d'un pulvérisateur se déplaçant en un mouvement transversal de va-et-vient sur un rail au-dessus du ruban de verre défilant à vitesse uniforme dans une zone de revêtement située entre une installation d'élaboration du ruban de verre, par exemple un four de flottage, et un four de recuisson.

Quand on utilise une telle technique, on produit sur le verre à un instant donné une tâche ovale, et par le mouvement de va-et-vient transversal de pulvérisateur combiné au mouvement de défilement longitudinal du verre, cette tâche se déplace en zigzag sur le verre pour le recouvrir. Mais cela ne permet pas d'atteindre un recouvrement uniforme du verre, et il en résulte une irrégularité de la teinte du revêtement. En outre, une partie de la solution de composés métalliques, issue du pulvérisateur, se décompose avant son arrivée sur le verre, à cause de la chaleur régnant dans l'espace de pulvérisation, ce qui a pour conséquence de conduire à une diminution de l'efficacité du traitement et à une diminution de la coloration du verre.

Il est connu par le brevet FR 2 288 068, pour remédier aux irrégularités de revêtement résultant de l'utilisation d'un pulvérisateur se déplaçant en un mouvement transversal de va et vient, d'effectuer la pulvérisation à l'aide d'une rampe statique de pulvérisation disposée transversalement par rapport au ruban de verre et munie d'une fente apte à délivrer un rideau continu de gouttelettes de produit de revêtement sur toute la largeur dudit ruban de verre.

Pour refroidir la zone de pulvérisation et éviter ainsi la pyrolyse prématurée des produits pulvérisés, ce brevet propose également de souffler de l'air de refroidissement $G_1$ dans cette zone de pulvérisation. Dans ce brevet antérieur, selon l'un des modes de réalisation, cet air de refroidissement est injecté dans la zone de pulvérisation par deux gaines de soufflage (36) dont les orifices sont disposés symétriquement de part et d'autre du plan médian du rideau de goutelettes. Les flux gazeux $G_1$ ne sont pas diriges parallèlement audit plan médian, ils s'écartent de celui-ci à la sortie des orifices.

La présente invention vise également à remédier aux irrégularités de revêtement que l'on constate lorsqu'on utilise un pulvérisateur se déplaçant en un mouvement de va et vient, mais elle propose un moyen autre que celui proposé dans le brevet antérieur FR 2 288 068, qui n'oblige pas à utiliser une rampe de pulvérisation, et qui permet de conserver les pulvérisateurs animés d'un mouvement de va et vient, cet autre moyen permettant en outre dans un mode de réalisation préféré de l'invention de remédier en même temps à la décomposition prématurée des produits avant leur rencontre avec le verre chaud.

Pour cela elle propose de souffler un gaz à proximité immédiate du jet pulvérisé issu du pulvérisateur, en direction du verre à revêtir, parallèlement à l'axe du jet, en amont et en aval dudit jet, l'amont et l'aval étant définis en fonction du sens de déplacement du verre.

Ce gaz soufflé interagit avec le jet, a une action sur sa forme et ses dimensions et permet donc de corriger les irrégularités de revêtement.

En outre lorsque, ce gaz est froid, il évite la décomposition prématurée des produits de revêtement.

De façon plus pratique, l'invention propose de disposer dans la partie supérieure de l'espace de pulvérisation, à proximité immédiate du pulvérisateur, des bouches de soufflage dirigées vers le verre à revêtir, parallèlement à l'axe du jet issu du pulvérisateur, qui dans un premier mode de réalisation font corps avec le pulvérisateur et se déplacent avec lui et qui dans un deuxième mode de réalisation sont constituées par des rampes de soufflage fixes disposées sur toute la largeur de l'installation, de chaque côté du trajet du pulvérisateur.

L'invention sera maintenant décrite plus en détail en référence aux figures qui représentent:

— Figure 1: un schéma d'une installation selon l'invention dans laquelle les bouches de soufflage font corps avec le pulvérisateur,

— Figure 2: un schéma d'une installation selon l'invention dans laquelle le soufflage est obtenu par des rampes fixes disposées sur toute la largeur du ruban de verre, de chaque côté du trajet du pulvérisateur.

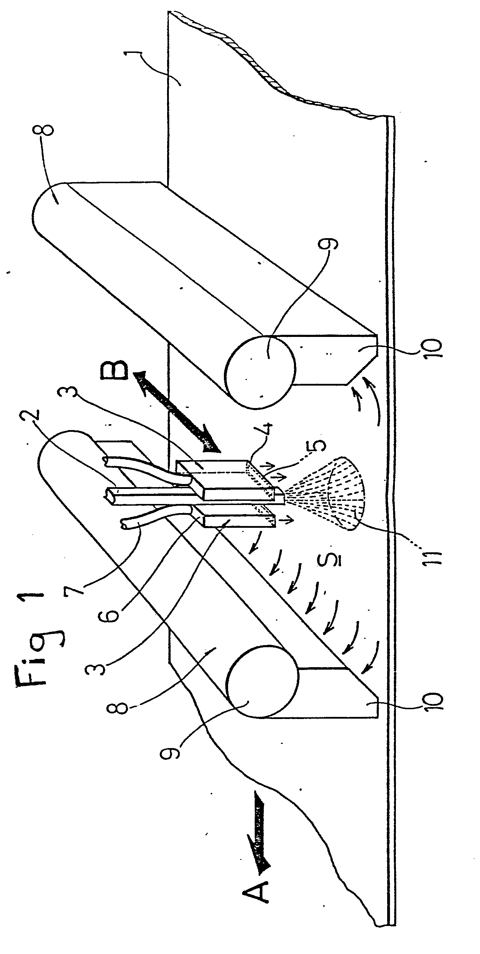

La figure 1 montre les éléments essentiels d'une installation de revêtement par un film d'oxydes métalliques, d'un ruban de verre 1, défilant à vitesse uniforme dans la direction A, à l'aide d'un pulvérisateur 2 animé d'un mouvement de va-et-vient dans la direction transversale B de la largeur du ruban de verre 1. Des moyens 8 d'évacuation des déchets constitués par les gaz de décomposition de la solution pulvérisée et également par des substances non décomposées, sont prévus de chaque côté du trajet transversal du pulvérisateur 2.

Ces moyens 8 comportent à chaque extrémité amont et aval de l'espace de pulvérisation S un tuyau 9 relié à un ventilateur d'aspiration non figuré, et descendant de chaque tuyau 9, jusqu'à proximité de la surface du ruban de verre 1, un embout d'aspiration 10 terminé par une pluralité de fentes d'aspiration s'étendant sur toute la largeur du ruban de verre 1.

Conformément à l'invention, des dispositifs de soufflage d'air constitués par deux caissons 3, terminés chacun à leur partie inférieure 4 par une bouche de soufflage 5 et alimentés en air sous pression à leur extrémité supérieure 6 par un·

tuyau 7, sont fixés sur la partie inférieure du pulvérisateur 2.

A l'aide de ces dispositifs de soufflage associés au pulvérisateur 2, on peut faire souffler de l'air vers le bas de l'espace de pulvérisation S, en direction du verre 1, en même temps que l'on pulvérise une solution de composés métalliques, tels que l'acétylacétonate de titane, de fer ou de chrome, le dipropionylméthane de cobalt ou un mélange de ceux-ci.

Sous l'influence de l'air soufflé, on obtient un étalement de la solution pulvérisée sur chacun des côtés où agit le soufflage, et il en résulte un allongement dans la direction A de l'impact 11 du jet pulvérisé sur le verre, une meilleure répartition de la solution d'où une plus grande uniformité de la couleur du revêtement. Cela semble pouvoir s'expliquer par un entrainement plus actif et une vitesse plus grande en direction du verre, de la solution présente à la périphérie du cône de pulvérisation issu du pulvérisateur, grâce à l'action des jets d'air.

On peut par exemple souffler de l'air à température ambiante, en veillant toutefois à ne pas trop abaisser la température dans l'espace de pulvérisation, et surtout à ne pas l'abaisser en-dessous de la température voulue pour provoquer avec un bon rendement la décomposition de la solution sur le verre. En outre, grâce au refroidissement localisé procuré par le soufflage à partir des bouches 5, la solution pulvérisée se décompose beaucoup moins vite avant d'atteindre le verre. Bien entendu, à la place de l'air, il est possible de souffler un autre gaz, par exemple de l'azote.

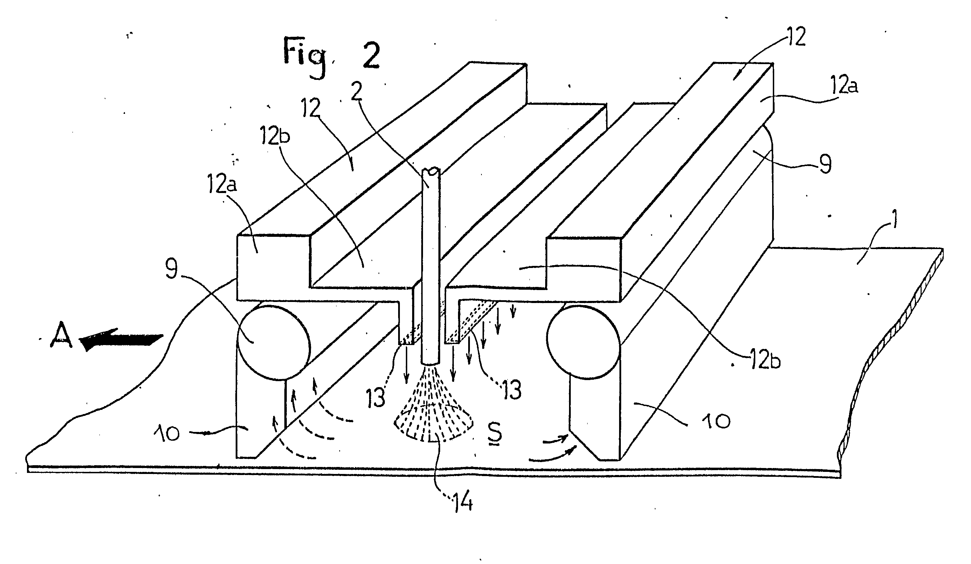

La figure 2 montre une variante de réalisation de l'invention.

On retrouve le même ruban de verre 1 défilant à vitesse uniforme dans la direction A à travers un espace S réservé à la pulvérisation d'une solution de composés métalliques à l'aide d'un pulvérisateur 2 animé, à l'intérieur de cet espace S, d'un mouvement de va-et-vient transversal dans la direction de la largeur du ruban de verre 1. Cet espace de pulvérisation S est, comme également montré figure 1, limité en amont et en aval par deux moyens 8 d'évacuation des déchets, ces moyens étant chacun essentiellement constitués d'un tuyau 9 branché sur un aspirateur et relié à un embout d'aspiration 10 terminé au voisinage immédiat de la surface du ruban de verre 1 par une pluralité de fentes d'aspiration. On retrouve également deux dispositifs 12 de soufflage d'air encadrant le pulvérisateur 2 en amont et en aval.

Dans cette variante, les dispositifs 12 de soufflage sont fixes et indépendants du pulvérisateur 2. Ils sont constitués chacun par un caisson 12a, faisant toute la largeur de l'installation, branché sur une source d'alimentation en air, non visualisée sur la figure, et par une gaine 12b qui prolonge chaque caisson 12a, d'abord horizontalement en direction du pulvérisateur 2 vers le centre de l'espace de pulvérisation S, puis verticalement de chaque côté du pulvérisateur 2. A l'extrémité basse de la portion verticale de chaque gaine 12b est située une bouche 13 de soufflage allongée sur toute la largeur de l'installation.

Comme indiqué précédemment en relation avec la figure 1, de l'air, ou un autre gaz si on le désire, est soufflé au travers des deux bouches 13 disposées à proximité du trajet du pistolet 2, en amont et en aval dudit trajet, en même temps que de la solution est pulvérisée par le pistolet 2 animé d'un mouvement de va-et-vient.

Comme indiqué précédemment, le gaz, ou en général l'air soufflé par ces bouches 13 agit sur le jet en cône de produits pulvérisés issu du pistolet, et il en résulte un allongement de la tâche d'impact 14 sur le verre, dans la direction A, une plus grande uniformité de cette tâche et donc une plus grande uniformité de teinte de cette tâche 14, ce qui se traduit, du fait du mouvement de va-et-vient du pulvérisateur par une plus grande uniformité de l'ensemble du revêtement. En outre, comme également indiqué en relation avec la figure 2, le soufflage d'air ou de gaz froid, refroidit l'environment immédiat de la pulvérisation et empêche ainsi une décomposition trop hâtive de la solution.

Grâce à l'invention le choix d'un pulvérisateur prend moins d'importance qu'auparavant, étant donné qu'on peut grâce à un soufflage d'air additionnel, à proximité dudit pulvérisateur, modifier le jet de pulvérisation qu'il fournit, l'élargir, le rendre plus homogène, de façon à obtenir sur le verre un impact plus large, plus uniforme. Pour permettre un réel contrôle du jet pulvérisé grâce au soufflage d'air, les dispositifs de soufflage de cet air, seront avantageusement pourvus de moyens permettant de choisir le débit, la température de l'air soufflé.

En outre on diminue la quantité de déchets que l'on doit éliminer du fait qu'on empêche la décomposition trop hâtive de la solution en soufflant de l'air froid. Il en résulte également une meilleure qualité du revêtement non souillé par des déchets.

**Revendications**

1. Procédé de fabrication de verre revêtu d'un film d'oxydes métalliques dans lequel on pulvérise sur un ruban de verre à haute température défilant longitudinalement à vitesse uniforme une solution de composés métalliques décomposables à la chaleur en oxydes métalliques, à l'aide d'un pistolet de pulvérisation animé d'un mouvement de va et vient transversalement par rapport au ruban de verre, caractérisé en ce qu'on souffle un gaz à proximité immédiate du jet pulvérisé, en direction du verre à revêtir, parallèlement à l'axe du jet, en amont et en aval dudit jet, l'amont et l'aval étant définis en fonction du sens de défilement du ruban de verre, la gaz étant soufflé suffisamment près du jet pulvérisé pour interagir avec celui-ci et en modifier la forme.

2. Installation de fabrication de verre revêtu d'un film d'oxydes métalliques, comprenant au moins un pulvérisateur (2) animé d'un mouvement transversal de va et vient au-dessus d'un ruban de verre (1) défilant longitudinalement à vitesse uniforme, et pulvérisant sur le verre un jet de solution de composés métalliques, caractérisée en ce qu'elle comporte en outre des dispositifs de soufflage d'un gaz, notamment de l'air, dirigés parallèlement à l'axe du jet en direction du verre (1) disposés à proximité immédiate du pulvérisateur (2) en amont et en aval dudit pulvérisateur de façon que le gaz ou l'air soufflé interagisse avec le jet de solution pulvérisée issu du pulvérisateur (2).

3. Installation selon la revendication 2, caractérisée en ce que les dispositifs de soufflage sont alimentés en gaz ou air à basse température, notamment à température ambiante.

4. Installation selon l'une quelconque des revendications 2 ou 3, caractérisée en ce que les dispositifs de soufflage (3) attachés sur le pulvérisateur (2), font corps et se déplacent avec lui.

5. Installation selon l'une quelconque des revendications 2 à 4, caractérisée en ce que les dispositifs de soufflage (12) sont constitués par des éléments fixes situés dans la partie supérieure de l'espace de pulvérisation (S) et en ce qu'ils débouchent à proximité du pulvérisateur (2) par des bouches de soufflage (13), allongées sur toute la largeur de l'installation et bordant le trajet du pulvérisateur.

**Patentansprüche**

1. Verfahren zur Herstellung von mit einem Film aus Metalloxiden beschichtetem Glas, bei welchem auf ein in Längsrichtung mit gleichmäßiger Geschwindigkeit vorbeilaufendes Glasband mit hoher Temperatur eine bei Wärme zu Metalloxiden zersetzbare Lösung aus Metallverbindungen mit Hilfe einer Sprühpistole aufgesprüht wird, welce quer zum Glasband hin und her bewegt wird, dadurch gekennzeichnet, daß in unmittelbarer Nähe des Sprühstrahls ein Gas in Richtung des zu beschichtenden Glases parallel zur Strahlachse sowie stromaufwärts und stromabwärts zum Strahl (wobei stromaufwärts und stromabwärts bezüglich des Vorbeilaufs des Glasbands definiert sind) geblasen wird, wobei das Gas ausreichend nah am Sprühstrahl zum Zwecke der Wechselwirkung mit diesem und zur Änderung der Form geblasen wird.

2. Vorrichtung zur Herstellung eines mit einem Film aus Metalloxiden beschichteten Glases, mit mindestens einer Sprüheinrichtung (2), welche oberhalb eines mit gleichmäßiger Geschwindigkeit in Längsrichtung vorbeilaufenden Glasbands quer zu diesem hin- und herbewegt wird und auf das Glas einen Strahl einer Lösung von Metallverbindungen aufsprüht, dadurch gekennzeichnet, daß die Vorrichtung Blaseinrichtungen für ein Gas, insbesondere Luft, aufweist, welche parallel zur Achse des Sprühstrahls in Richtung des Glases (1) ausgerichtet und in unmittelbarer Nachbarschaft der Sprüheinrichtung (2) stromaufwärts und stromabwärts der Sprüheinrichtung angeordnet sind, derart, daß das Gas oder die Luft in Wechselwirkung mit dem Sprühstrahl aus der Sprüheinrichtung (2) gelangt.

3. Vorrichtung nach Anspruch 2, dadurch gekennzeichnet, daß die Blaseinrichtungen mit Gas oder Luft mit geringer Temperatur, insbesondere Umgebungstemperatur, betrieben werden.

4. Vorrichtung nach Anspruch 2 oder 3, dadurch gekennzeichnet, daß die auf der Sprüheinrichtung (2) befestigten Blaseinrichtungen (3) Teil der Blaseinrichtungen bilden und sich mit der Blaseinrichtung verschieben.

5. Vorrichtung nach einem der Ansprüche 2 bis 4, dadurch gekennzeichnet, daß die Blaseinrichtungen (12) durch feststehende Elemente gebildet sind, welche im oberen Teil des Zerstäuberraums (S) angeordnet sind, und daß die Blaseinrichtungen in der Nähe der Sprüheinrichtung (2) in Blasöffnungen (13) münden, die sich über die gesamte Breite der Vorrichtung erstrecken und die Bahn der Sprüheinrichtung begrenzen.

**Claims**

1. A method of making glass coated with a film of metal oxides in which there is sprayed, on to a glass ribbon at a high temperature moving longitudinally at uniform speed, a solution of metallic compounds decomposable to metal oxides on heating by means of a spray gun driven in to-and-fro movement transversely with respect to the glass ribbon, characterised in that a gas is blown in the immediate proximity of the sprayed jet, in the direction of the glass to be coated, parallel to the axis of the jet upstream and downstream of said jet, upstream and downstream being defined as a function of the direction of movement of the glass sheet, and the gas being blown sufficiently close to the sprayed jet to interact with the latter and modify its shape.

2. An installation for making glass coated with a film of metal oxides, comprising at least one spray device (2) driven in to-and-fro transverse movement above a glass ribbon (1) moving longitudinally at uniform speed, and spraying on to the glass a jet of a solution of metallic compounds, characterised in that it further comprises devices for blowing a gas, such as air, directed parallel to the axis of the jet in the direction of the glass (1) arranged in the immediate proximity of the spray device (2) upstream and downstream of said spray device so that the blown gas or air interacts with the jet of sprayed solution leaving the spray device (2).

3. An installation according to claim 2, characterised in that the blowing devices are fed with gas or air at low temperature, notably ambient temperature.

4. An installation according to claim 2 or 3, characterised in that the blowing devices (3) associated with the spray device (2) are attached thereto and displaced therewith.

5. An installation according to any one of claims 2 to 4, characterised in that the blowing devices (12) comprise fixed elements situated in the upper part of the spraying space (5) and they open in the proximity of the spray device (2) by blowing nozzles (13) which extend over the whole width of the installation and along the edge of the path of the spray device.

Fig 1

Fig. 2